# EUROPEAN PATENT SPECIFICATION

(11) **EP 1 767 432 B1**
(45) Date of publication and mention of the grant of the patent: **30.07.2008**
(21) Application number: 06018579.0
(22) Date of filing: 05.09.2006
(51) Int. Cl.: B62D 1/181

(54) **Tilt-telescopic steering column apparatus**
Winkelverstell- und teleskopierbare Lenksäuleneinrichtung
Appareil de colonne de direction inclinable et télescopique

(30) Priority: 26.09.2005 JP 2005278051
(43) Date of publication of application: 28.03.2007
(73) Proprietor: FUJI KIKO Co., Ltd., Kosai-shi, Shizuoka 431-0431 (JP)
(72) Inventor: Arihara, Koji, Kosai-shi Shizuoka 431-0431 (JP)
(74) Representative: Grünecker, Kinkeldey, Stockmair & Schwanhäusser Anwaltssozietät

(56) References cited:
- DE-A1- 4 344 681
- JP-A- 2001 199 350

## Description

### BACKGROUND OF THE INVENTION

The present invention relates to a tilt telescopic steering apparatus adapted to be driven electrically.

Generally, an electrically-driven tilt-telescopic steering column apparatus is used in an automotive vehicle, as a steering system for performing a tilt mechanism and a telescopic mechanism by means of electric motor. As a tilt mechanism provided in the electrically-driven tilt-telescopic steering column apparatus, the following two structures are conceivable. Namely, one is a structure that only a part of steering shaft and a supporting portion covering this part of steering shaft are adapted to swing around a tilt-hinge portion by providing the tilt-hinge close to a steering wheel namely close to driver's hands. Another is a structure that the whole of steering shaft is adapted to swing around the tilt-hinge portion by providing the tilt-hinge close to driver's feet.

Japanese Utility Model Application Publication No. 1993(H05)-76945 discloses an electrically-driven tilt-telescopic steering column apparatus in which the tilt-hinge is provided close to driver's hands. In this technique, a screw shaft serving for the tilt mechanism and a screw shaft serving for the telescopic mechanism are separately arranged below the steering shaft, to become substantially uneven parallel (high and low) shafts.

Moreover, Japanese Utility Model Application Publication No. 1994(H06)-53366 discloses an electrically-driven tilt-telescopic steering column apparatus in which the tilt-hinge is provided close to driver's feet. In this technique, the screw shaft serving for the tilt mechanism and the screw shaft serving for the telescopic mechanism are separately arranged in the same (imaginary) straight line as compared to the technique of above Application Publication No. 1993(H05)-76945.

### SUMMARY OF THE INVENTION

However in the cases of above two Japanese Utility Model Applications, the screw shaft for tilt mechanism and the screw shaft for telescopic mechanism which are located below the steering shaft are arranged so as to be In the same straight line as each other or be displaced from each other In the proximity of steering shaft, as mentioned above. Hence, there is a problem that a space occupied by the tilt-telescopic steering column apparatus becomes large, and the number of components becomes large due to the necessity for providing components individually supporting each of two screw shafts.

Japanese Patent Application Publication No. 2001-199350 discloses an electrically-driven tilt-telescopic steering column apparatus in which a significant portion of a screw shaft serving for the tilt mechanism is located within a hollow found in a screw shaft serving for the telescopic mechanism. A nut member is screwed on one end of the inner screw shaft projecting from the hollow, and the steering wheel is adapted to be tilted by rotating the inner screw shaft such that the nut member is moved in the axial direction. A second nut member is screwed on the outer screw shaft, and the steering wheel is adapted to be telescoped by rotating the outer screw shaft. In this technique, the two screw shafts are rotably driven separately by a single electrical motor that also provides assistance to the steering operation of a steering wheel. A transmission rod incorporating three gears is rotated by said electrical motor and can be moved to three different positions in the axial direction of the two screw shafts in order to transmit the rotation to either the steering shaft or one of the two screw shafts. Displacing the transmission rod involves a process of disengaging at least one set of meshing gears, and re-engaging at least one other set of meshing gears.

It is an object of the present invention to provide a tilt-telescopic steering column apparatus devised to solve or ease the above-mentioned problems.

According to one aspect of the present Invention, there is provided a tilt-telescopic steering column apparatus comprising: a steering shaft including a lower shaft connected with a steering gear unit, and an upper shaft connected with a steering wheel, and connected with the lower shaft to be telescopically movable In its axial direction with respect to the lower shaft; a first supporting member rotatably supporting the lower shaft; a second supporting member rotatably supporting the upper shaft and adapted to be moved in the axial direction of steering shaft with respect to the first supporting member; a first screw shaft disposed in substantially parallel with an axis of the steering shaft, and supported by one of the first supporting member and the second supporting member to be capable of being drivingly rotated, the first screw shaft being formed with a hollow hole; a first nut member screwed on the first screw shaft, the steering wheel being adapted to be tilted by moving the first nut member in the axial direction; a second screw shaft disposed in substantially parallel with the axis of the steering shaft and disposed to be coaxial with the first screw shaft, one end portion of the second screw shaft being supported by another of the first supporting member and the second supporting member to be capable of being drivingly rotated, another end portion of the second screw shaft being inserted into the hollow hole of first screw shaft to be movable in the axial direction with respect to the first screw shaft; and a second nut member screwed on the second screw shaft, and fixed on the one of the first supporting member and the second supporting member, the steering wheel being adapted to be telescoped by rotating the second screw shaft.

The other objects and features of this invention will become understood from the following description with reference to the accompanying drawings.

### BRIEF DESCRIPTION OF THE DRAWINGS

FIG. 1 is an enlarged sectional view (substantially lateral section view) showing a main part of electrically-driven tilt-telescopic steering column apparatus of a first embodiment according to the present invention.

FIG. 2 is an oblique perspective view of the tilt-telescopic steering column apparatus in the first embodiment.

FIG. 3 is a sectional view showing the tilt-telescopic steering column apparatus in the first embodiment.

FIG. 4 is a right side view of FIG. 3.

FIG. 5 is a plane view (top view) showing the tilt-telescopic steering column apparatus in the first embodiment.

FIG. 6 is a front view showing the tilt-telescopic steering column apparatus in the first embodiment.

FIG. 7 is a bottom view showing the tilt-telescopic steering column apparatus in the first embodiment.

FIG. 8 is a schematic (sectional) view of an electrically-driven tilt-telescopic steering column apparatus of second embodiment according to the present invention.

### DETAILED DESCRIPTION OF THE INVENTION

Reference will hereinafter be made to the drawings in order to facilitate a better understanding of the present invention. Embodiments of electrically-driven tilt-telescopic steering column apparatus according to the present invention will now be explained below. A first embodiment shows the case where a whole of steering shaft is tilted by providing a tilt-hinge close to driver's feet. A second embodiment shows the case where only an upper portion of steering shaft is tilted by providing the tilt-hinge close to driver's hands.

### [First Embodiment]

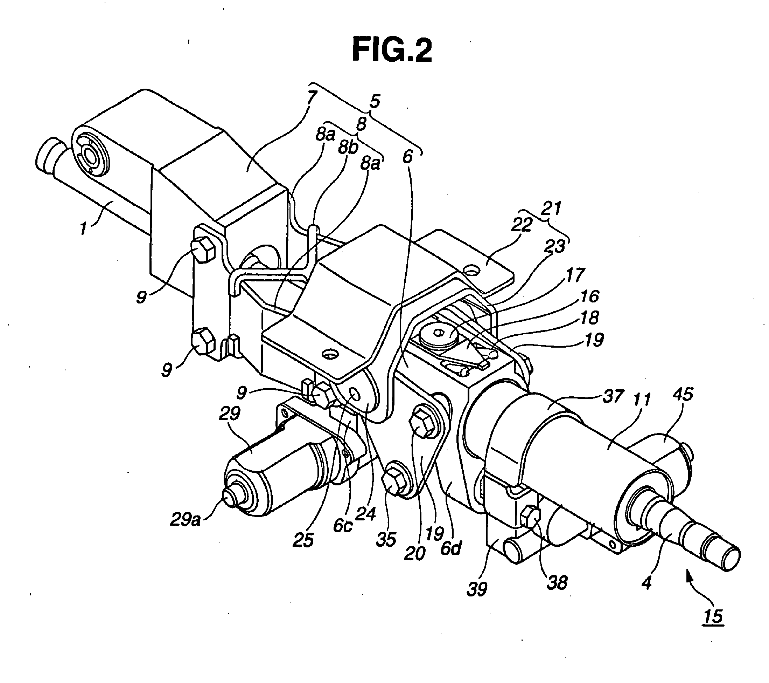

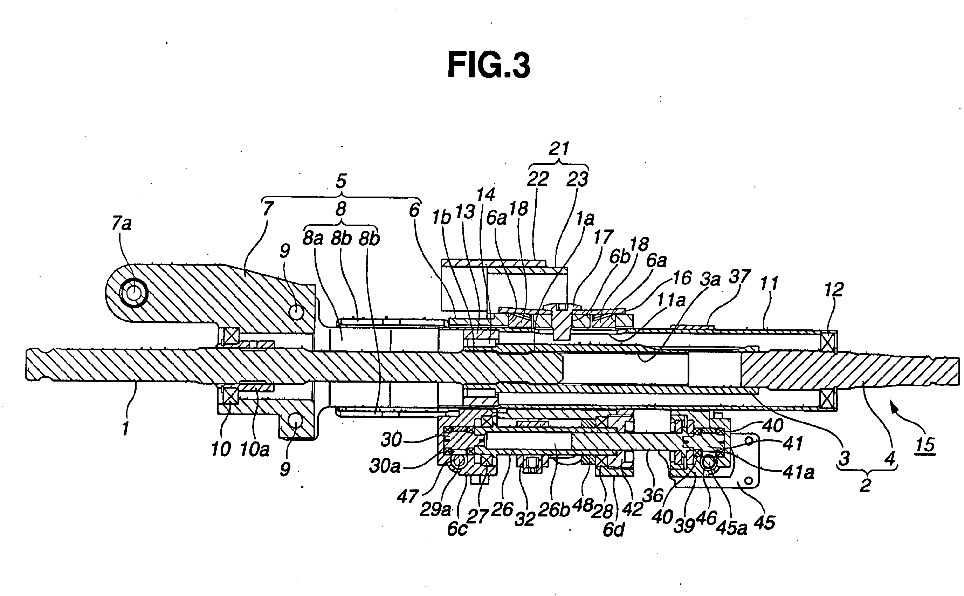

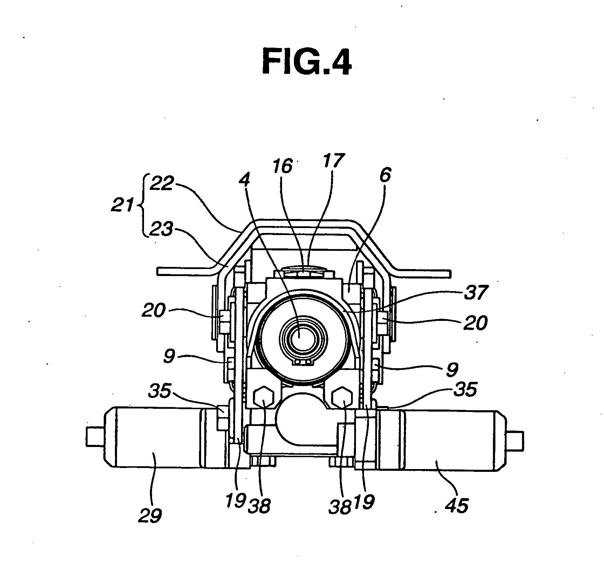

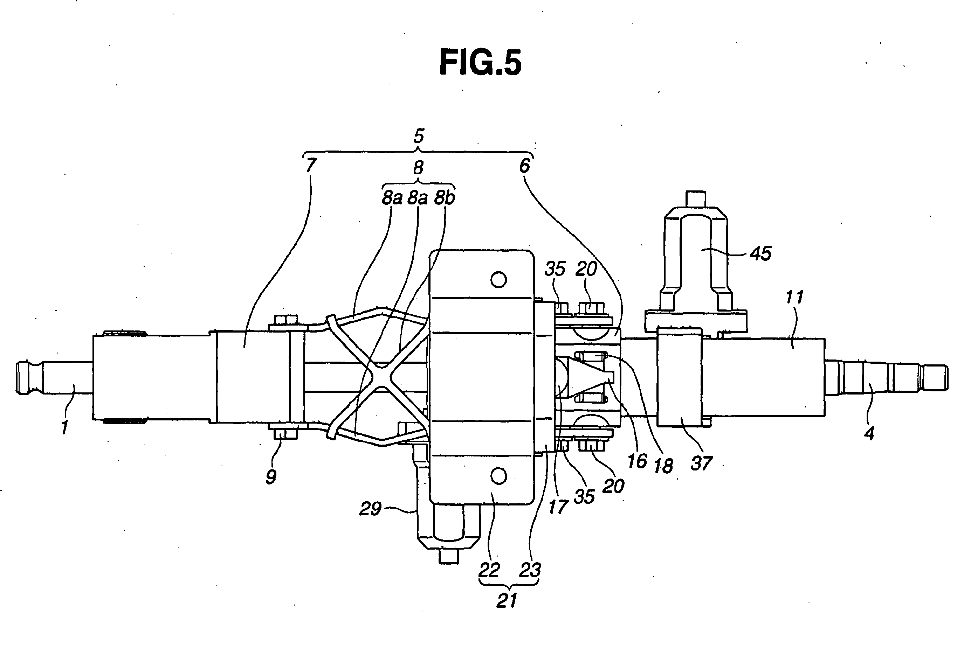

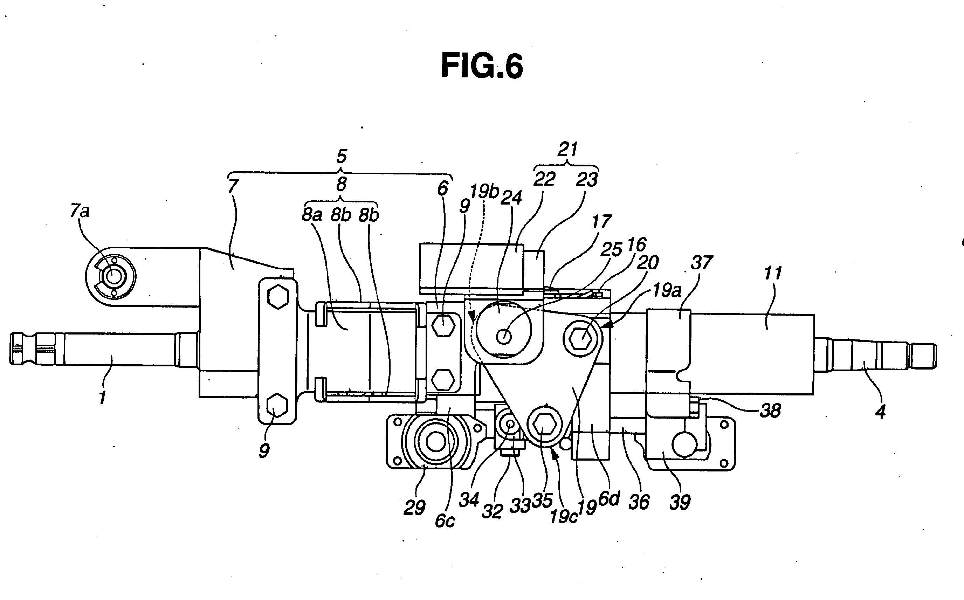

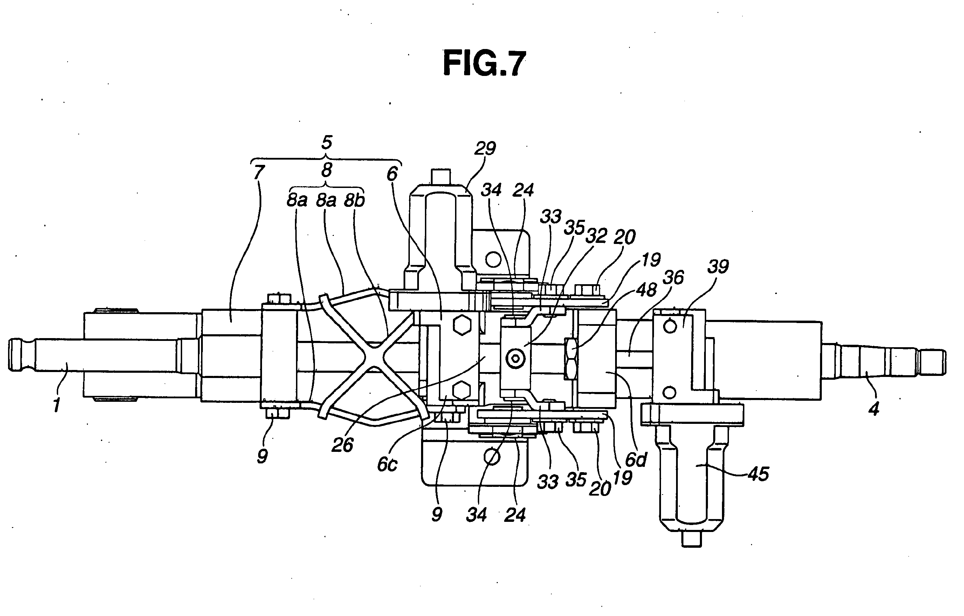

At first, the first embodiment according to the present invention will now be explained. FIG. 2 is an oblique perspective view of electrically-driven tilt-telescopic steering column apparatus according to the present invention. FIG. 3 is a front sectional view of the tilt-telescopic steering column apparatus. FIG. 4 is a right side view of the tilt-telescopic steering column apparatus. FIG. 5 is a plane view (top view) of the tilt-telescopic steering column apparatus. FIG. 6 is a front view of the tilt-telescopic steering column apparatus. FIG. 7 is a bottom view of the tilt-telescopic steering column apparatus.

As shown in FIG. 3, a steering shaft 15 includes a lower shaft 1 connected to a steering gear unit or gear box (not shown) to road wheels, and an upper shaft 2 connected to a steering wheel (not shown) which is operated by the driver. The lower shaft 1 and the upper shaft 2 are connected with each other, so as to be movable in its axis direction with respect to each other. Hence, the steering shaft 15 is capable of increasing and decreasing in length (can vary telescopically). Since an universal joint (not shown) is provided at the left end of lower shaft 1 (as viewed in FIG. 3), the lower shaft 1 is capable of bending or swinging. The upper shaft 2 includes a hollow shaft 3 and a solid shaft 4. The solid shaft 4 is fitted into the hollow shaft 3, and is connected with the hollow shaft 3 by means of welding. The lower shaft 1 includes a pair of large-diameter portions formed at one end of lower shaft 1. In outer peripheries of these large-diameter portions, a spline (teeth) 1a and a spline (teeth) 1b are respectively formed. On the other hand, a spline (teeth) 3a is formed inside the hollow shaft 3 (i.e., in an inner surface of hollow shaft 3). The splines 1a and 1b are respectively engaged with the spline 3a.

A housing 5 is provided as a first supporting member for rotatably supporting the lower shaft 1. The housing 5 includes a tube portion (or through-hole-formed portion) 6, a tube portion (or through-hole-formed portion) 7, and a coupling portion 8 coupling the tube portion 6 with the tube portion 7. It is noted that the tube portion 6 or 7 means an object formed with a hollow or through-hole and is not limited to a cylindrical object, as shown in FIGS. 2 and 3. The tube portion 6 covers or encloses a right end portion of lower shaft 1, and the tube portion 7 covers or encloses a mid portion of lower shaft 1, as shown in FIG. 3. The coupling portion 8 includes a pair of side plates 8a and a pair of coupling plates 8b. The pair of side plates 8a are respectively formed in a dogleg (elbowed) shape, and are located on right and left sides relative to vehicle body. The pair of coupling plates 8b are respectively formed in the shape of X, and are located on upper and lower sides relative to vehicle body. As shown in FIGS. 5 to 7, the pair of side plates 8a and the pair of coupling plates 8b are combined and integrated with one another, by welding four end portions of each of coupling plates 8b arranged above and below right-side and left-side plates 8a. As shown in FIG. 6, bolts 9 passed through both ends of each side plate 8a are screwed into the tube portion 6 and the tube portion 7. Accordingly, the tube portion 6, the tube portion 7, and the coupling portion 8 are integrally combined. As shown in FIG. 3, the tube portion 7 rotatably supports the lower shaft 1, through a collar 10a and a bearing 10 such as a ball bearing. The collar 10a is molded on the lower shaft 1 from resin. The tube portion 7 includes a projecting portion projecting to the left (of FIG. 3), in an upper portion of tube portion 7. This projecting portion is formed with a tilt-hinge hole 7a for connecting the tube portion 7 swingablly with the vehicle body through a bolt (not shown). This bolt functions as the tilt-hinge.

A jacket tube 11 is provided as a second supporting member for rotatably supporting the upper shaft 2. The jacket tube 11 is formed in a tubular shape. The solid shaft 4 of upper shaft 2 is supported by a right end (of FIG. 3) of jacket tube 11 through a bearing 12 such as a ball bearing. The hollow shaft 3 of upper shaft 2 is supported by a left end (of FIG. 3) of jacket tube 11, through an outer race 13 provided as a bearing and a plurality of needle rollers 14 provided inside the outer race 13.

The jacket tube 11 is provided to be movable in the axis direction of steering shaft 15 with respect to the housing 5. Namely, this structure is as follows. The jacket tube 11 is inserted into the tube portion 6 constituting the housing 5. An upper surface of tube portion 6 is formed with a pair of through holes 6a arranged apart from each other in the axial direction of jacket tube 11. The pair of through holes 6a are formed in the shape of rectangular, in the upper surface (portion) of tube portion 6. A pressure receiving member 18 formed substantially in the shape of rectangular parallelepiped is inserted into each through hole 6a. The thickness dimension of pressure receiving member 18 is larger than that of tube portion 6. A screw hole 6b passing through the tube portion 6 in a radial direction is formed at a position between the pair of through holes 6a. A bolt 17 passed through the intermediate portion of a leaf spring (plate spring) 16 is screwed into the screw hole 6b, as shown in FIG. 2. The pressure applied to the jacket tube 11 by the pressure receiving members 18 disposed in the tube portion 6 is varied (increased or decreased) by increasing or decreasing a screwed amount (screwed part) of bolt 17. Hence, a clearance (play) and a sliding characteristic between the tube portion 6 and the jacket tube 11 can be adjusted. A tip of bolt 17 is inserted into a guide groove 11a formed in the jacket tube 11 along the axial direction. Since the bolt 17 moves along the guide groove 11a, the jacket tube 11 can move in the axial direction thereof relatively with respect to the housing 5, without rotating in a circumferential direction.

Next, the structure for swinging the housing 5 around the tilt-hinge hole 7a in order to tilt (i.e., adjust up and down the position of) the steering wheel (not shown) will now be explained. A swinging arm 19 formed substantially in the shape of triangle is disposed at each of both sides of tube portion 6 constituting the housing 5. As shown in FIG. 6, a first vertex portion 19a which is a base end portion of swinging arm 19 is connected swingablly with a side surface (right or left side surface with reference to vehicle body) of tube portion 6 through a bolt 20. A second vertex portion 19b which is one tip portion of swinging arm 19 is located so as to swing in up-down direction with reference to the first vertex portion 19a. The second vertex portion 19b is connected swingablly with a bracket 21 mounted on the vehicle body. The bracket 21 includes an upper bracket 22 attached to the vehicle body from beneath this attachment portion of vehicle body, and a lower bracket 23 combined with the lower portion of upper bracket 22 by welding. The lower bracket 23 is formed substantially in an U-shape in cross section. The lower bracket 23 includes both ends (or end portions) each dropping in the downward direction. Each second vertex portion 19b of swinging arm 19 is arranged inside the both end portions of lower bracket 23. Namely, each second vertex portion 19b is connected swingablly with the end portion of lower bracket 23 so that the both second vertex portions 19b are sandwiched between the both end portions of lower bracket 23.

The connecting structure between the swinging arm 19 and the both end portions of lower bracket 23 will now be explained. In the case where the housing 5 swings around (about) the tilt-hinge hole 7a, the portion of bolt 20 screwed into the tube portion 6 swings around the tilt-hinge hole 7a and also swings around the connecting portion between lower bracket 23 and swinging arm 19. Hence, if this connecting portion is designed with a simple bolt joint; the swinging arm 19 becomes incapable of swinging since a center distance between the connecting portion of lower bracket 23 and the bolt 20 is varied when swinging the housing 5. Therefore, an eccentric bush 24 is provided to (each end portion of) the lower bracket 23 so as to allow the eccentric bush 24 to rotate around its center, as means for absorbing the center-distance variation (center-distance variation absorbing member). The second vertex portion 19b of swinging arm 19 is connected swingablly with an eccentric position of eccentric bush 24 through a bolt 25. Namely, the eccentric bush 24 serves to absorb the increase or decrease in center distance, and thereby secure the swing and connection of swinging arm 19 when swinging the housing 5.

By swinging the swinging arm 19 around the bolt 20, the housing 5 connected with the swinging arm 19 through the bolt 20 is made to move up and down (rise and fall) as the result, and thereby the housing 5 is swung around the tilt-hinge hole 7a. To achieve this mechanism, a third vertex portion 19c which is another tip portion of swinging arm 19 is located so as to swing in right-left direction (of FIG. 6) with reference to the first vertex portion 19a. A mechanism for swinging this position of third vertex portion 19c in the right-left direction of FIG. 6 is provided. Namely as shown in FIG. 3, a first screw shaft 26 is placed at a lower part of the tube portion 6 of housing 5. The first screw shaft 26 is supported by the tube portion 6 (or, is provided in the housing 5), so as to be drivingly rotatable and to be substantially in parallel with the axis of steering shaft 15.

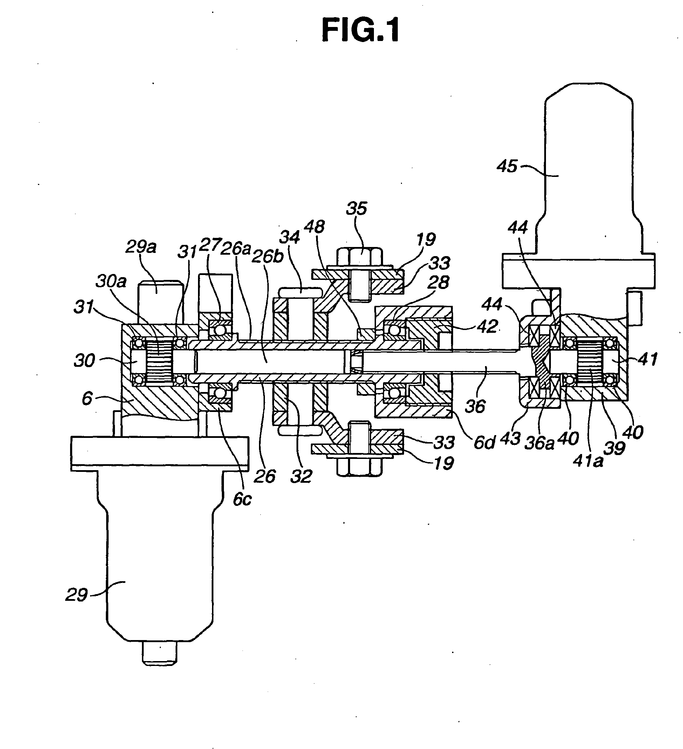

Also as shown in FIG. 1, both end portions (or their vicinities) of first screw shaft 26 are rotatably supported through bearings 27 and 28 by shaft supporting portions 6c and 6d formed integrally with the tube portion 6. The first screw shaft 26 includes a stopper 48 for stopping the movement of an after-mentioned first nut member 32 at the position of a stroke end thereof. The stopper 48 is provided adjacent to the bearing 28. A male thread 26a is formed in an outer peripheral surface of first screw shaft 26, and a hollow hole 26b is formed inside the first screw shaft 26 along the axis of first screw shaft 26. At one shaft supporting portion 6c of tube portion 6, a first motor 29 is mounted so as to project to the left of vehicle body. A worm 47 is attached on an output shaft 29a of first motor 29 as shown in FIG. 3, and a worm wheel portion 30a for engaging with this worm 47 is provided. This worm wheel portion 30a is formed integrally with a connection shaft 30 which is rotatably supported through a pair of bearings 31 by the tube portion 6. As shown in FIG. 1, one end of connection shaft 30 is connected with one end of first screw shaft 26, so as to rotate integrally (rotate as a unit) with the first screw shaft 26. In detail, the connection shaft 30 is fitted into the hollow hole 26b of first screw shaft 26 by means of contour fitting or press fitting. Since the first nut member 32 is screwed (screw-connected) on the first screw shaft 26, the first nut member 32 moves along the axis of first screw shaft 26 in accordance with the rotation of first screw shaft 26.

Although the first nut member 32 moves linearly in the right and left direction of FIG. 1, the third vertex portion 19c of swinging arm 19 moves along an arc defining the bolt 20 as a center of arc. Hence, if the first nut member 32 is connected with the third vertex portion 19c simply by a bolt joint; the swinging arm 19 becomes incapable of swinging smoothly since a center distance between the third vertex portion 19c and the first nut member 32 is varied. Therefore, the first nut member 32 is connected with the third vertex portion 19c of swinging arm 19 through a link 33 provided as means for absorbing the center-distance variation. Namely as shown in FIG. 1, one end of link 33 is swingablly connected with each of both sides of first nut member 32 through a screw 34, and another end of link 33 is swingablly connected with the third vertex portion 19c of swinging arm 19 through a bolt 35.

On the other hand, as shown in FIG. 3, one end of a second screw shaft 36 is supported rotatably and drivingly by a shaft supporting portion 39 connected to the jacket tube 11, to cause the second screw shaft 36 to be substantially in parallel with the axis of steering shaft 15. This second screw shaft 36 is arranged on the same straight line (collinear) as (the axis of) the first screw shaft 26. Another end portion of second screw shaft 36 is slidably received by or inserted into the hollow hole 26b formed in the first screw shaft 26. Namely, the second screw shaft 36 can move backward and forward in the hollow hole 26b.

The detailed structure is as follows. As shown in FIGS. 5 and 6, a mounting (metal) bracket 37 formed substantially in an U-shape is wound around an intermediate portion of jacket tube 11 from above. Also as shown in FIG. 2, the mounting bracket 37 is fixed on the jacket tube 11 so as to cover the inverted-U shaped mounting bracket 37 from above onto the jacket tube 11. The shaft supporting portion 39 is mounted on a lower portion of mounting bracket 37 through a bolt 38. As shown in FIG. 3, a connection shaft 41 is rotatably provided in the supporting portion 39 through a pair of bearings 40. The connection shaft 41 includes a worm wheel portion 41a formed in the surface of connection shaft 41. A second motor 45 is combined with the supporting portion 39, and the worm wheel portion 41a engages with a worm 46 of an output shaft 45a of second motor 45. One end of connection shaft 41 is connected with one end of second screw shaft 36, so as to cause the connection shaft 41 to rotate integrally with the second screw shaft 36. In detail, the end of connection shaft 41 is fitted into a shaft hole formed in one end of second screw shaft 36, by means of contour fitting or press fitting.

As shown in FIGS. 1 and 3, a second nut member 42 is provided at the position facing the end portion of first screw shaft 26, to become coaxial to the first screw shaft 26. Namely, a peripheral portion of second nut member 42 is fixedly screwed and mounted into a circular recess portion formed in the shaft supporting portion 6d, and the second screw shaft 36 is screwed (screw-connected) inside the second nut member 42. The another end portion of second screw shaft 36 is received inside the hollow hole 26b of first screw shaft 26, to allow the second screw shaft 36 to move backward and forward from the first screw shaft 26.

The jacket tube 11 moves in the axial direction relatively with respect to the housing 5, by causing the second screw shaft 36 to rotate. Accordingly, a thrust force is additionally applied to the second screw shaft 36. Therefore as shown in FIG. 1, the second screw shaft 36 includes a flange portion 36a formed integrally with the second screw shaft 36, at a base end portion of second screw shaft 36. Both sides of flange portion 36a are supported by a holder 43 through thrust bearings 44.

Next, operations and effects of the electrically-driven tilt-telescopic steering column apparatus according to the present invention will now be explained.

In order to tilt the steering wheel, the output shaft 29a of first motor 29 is made to rotate in either direction. Thereby, the rotation of output shaft 29a is transmitted through the worm 47 and the worm wheel portion 30a to the connection shaft 30. Thereby, the first screw shaft 26 is rotated. Since the first nut member 32 moves with respect to the housing 5, this movement (stroke) is transmitted to each third vertex portion 19c of swinging arm 19 through the link 33 as shown in FIG. 6. Thereby, the third vertex portion 19c of swinging arm 19 is made to move in the axial direction. Namely the swinging arm 19 is made to swing in either direction around the bolt 20. Accordingly, the second vertex portion 19b of swinging arm 19 is made to move upwardly or downwardly. In other words, when regarding the bracket 21 fixed on the vehicle body as a reference point of the movement; the position of the bolt 20 of swinging arm 19 moves upwardly or downwardly, and the housing 5 connected through the bolt 20 with the swinging arm 19 swings upwardly or downwardly around the tilt-hinge hole 7a. Thereby, the whole of steering shaft 15 is made to swing in the up-down direction (vertically) with respect to the vehicle body, and therefore the steering wheel (not shown) is tilted.

When the swinging arm 19 swings around the bolt 20; the position of bolt 35 moves along an arc defining the bolt 20 as a center of arc (i.e., circular motion), and on the other hand, the nut 32 moves linearly along the first screw shaft 26 (i.e. linear motion). Namely, since the path of bolt 35 does not accord with that of nut 32, the center distance therebetween is varied. In this embodiment, the bolt 35 is connected through the link 33 with the nut 32. Thereby, the force can be transmitted from the nut 32 to the bolt 35 while absorbing this variation of center distance, and accordingly the swing of swinging arm 19 is smoothly conducted.

The bolt 20 conducts the arc (circular) motion around the second vertex portion 19b of swinging arm 19, and also conducts the arc motion around the tilt-hinge hole 7a. Hence, if the connection portion between the lower bracket 23 and the second vertex portion 19b of swinging arm 19 is designed by means of a simple bolt connection; the swing of swinging arm 19 is difficult to be conducted due to the path difference of bolt 20 between the above two arc motions. Therefore in this embodiment, the lower bracket 23 is connected through the eccentric bush 24 with the second vertex portion 19b. Thereby, the connection and the swing between the lower bracket 23 and the second vertex portion 19b of swinging arm 19 can be retained, while this variation of center distance (path difference) is being absorbed. Accordingly, the swing of swinging arm 19 can be smoothly conducted.

Next in order to telescope the steering wheel, the output shaft 45a of second motor 45 is made to rotate in either direction. Thereby, the rotation of output shaft 45a is transmitted through the worm 46 and the worm wheel portion 41a to the connection shaft 41. Thereby, the second screw shaft 36 is rotated. Accordingly, since the second screw shaft 36 is gradually screwed further into (or back from) the second nut member 42, the jacket tube 11 and the second screw shaft 36 together move in the axial direction relatively with respect to the housing 5. Thereby, the upper shaft 2 is moved in the axial direction, and the steering wheel telescopes (i.e., the position of steering wheel is adjusted substantially in back and front direction of vehicle body). At this time, the another end of second screw shaft 36 moves inside the hollow hole 26b of first screw shaft 26.

According to the above-mentioned first embodiment of the present invention; both of the first screw shaft 26 and the second screw shaft 36 are arranged in the same straight line (coaxially with each other), and arranged substantially in parallel with the steering shaft 15. Moreover, the another end of second screw shaft 36 moves forward and backward inside the hollow hole 26b of first screw shaft 26. Therefore, an overall length of the first screw shaft 26 and the second screw shaft 36 (i.e., the length determined by adding a length of first screw shaft 26 to a length of second screw shaft 36) can be shortened. Thereby, a space occupied by the tilt-telescopic steering column apparatus can be reduced.

According to the above-mentioned first embodiment; the another end portion of second screw shaft 36 is held inside the hollow hole 26b formed in the first screw shaft 26. Therefore, one set of shaft supporting portion 6d and bearing 28 can support both of the first screw shaft 26 and the second screw shaft 36. Thereby, in addition to a simplification of supporting structure, a reduction of the number of necessary components and a weight reduction in the tilt-telescopic steering column apparatus can be achieved.

According to the above-mentioned first embodiment; the second nut member 42 is fixed on the shaft supporting portion 6d which is one of the pair of shaft supporting portions 6c and 6d rotatably supporting the first screw shaft 26, to be coaxial to the first screw shaft 26. Therefore, it can be considered that the shaft supporting portion 6d supports two members of the first screw shaft 26 and the second nut member 42. Accordingly, the simplification of supporting structure, the reduction of the number of necessary components, and the weight reduction in the tilt-telescopic steering column apparatus can be achieved.

According to the above-mentioned first embodiment; the swinging arm 19 is connected with the first nut member 32 and the vehicle body respectively through the center-distance variation absorbing means. Therefore, the swinging arm 19 can be swung without swinging the first screw shaft 26 with respect to the bolt 20. Namely, it is not necessary to employ the structure in which the first screw shaft 26 is swung with respect to the bolt 20. Thereby, the first screw shaft 26 can be disposed on the same axis as the second screw shaft 36. Further, the another end portion of second screw shaft 36 can be housed inside the hollow hole 26b formed in the first screw shaft 26.

### [Second Embodiment]

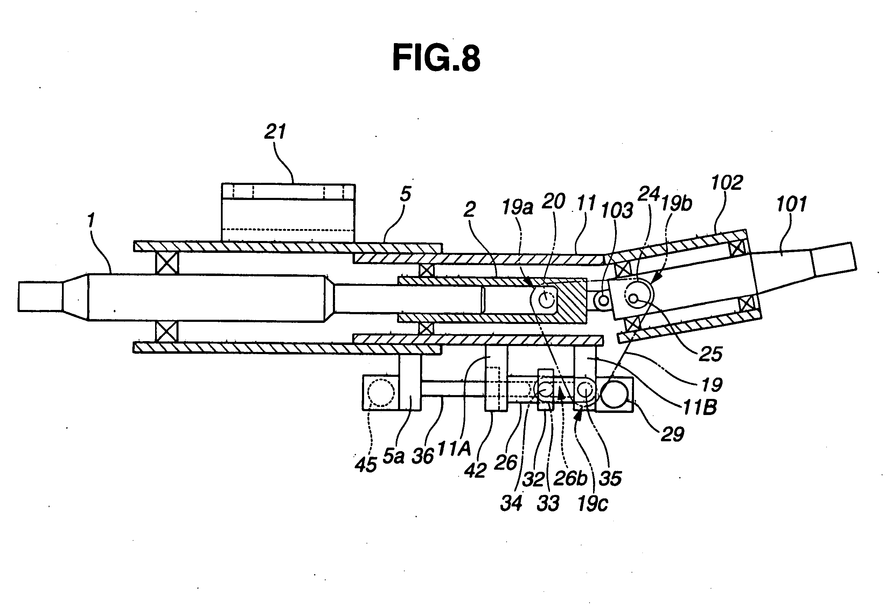

Next, a second embodiment according to the present invention will now be explained. In the second embodiment, the tilt-hinge is located closer to driver's hands. Since the basic structure is similar as the first embodiment, the tilt-telescopic steering column apparatus according to the second embodiment will be briefly explained with reference to FIG. 8. In FIG. 8, components functioning in the similar manner as the first embodiment are shown with the same reference numerals.

In this second embodiment, in addition to the lower shaft 1 and the upper shaft 2; an extension shaft 101 is interposed between the upper shaft 2 and the steering wheel, and is connected with an end of upper shaft 2 through a universal joint 103 to be capable of bending (or swinging). The universal joint 103 is adapted to combine the upper shaft 2 swingablly with the extension shaft 101. Moreover, an extension tube 102 for rotatably supporting the extension shaft 101 is provided as a third supporting member. This extension tube 102 is connected with the jacket tube 11 through a bending means (not shown), to be capable of swinging up and down around the center of the swing produced by the universal joint 103.

The housing 5 supporting the lower shaft 1 is fixed to the bracket 21 fixed on the vehicle body, so as not to swing (i.e., so as to prevent the housing 5 from moving with respect to the bracket 21). In the similar manner as the first embodiment; the jacket tube 11 is movable in the axial direction from the housing 5, and the upper shaft 2 is also movable in the axial direction from the lower shaft 1.

In this embodiment, the first screw shaft 26 is provided or included in the jacket tube 11. This first screw shaft 26 is supported by a pair of shaft supporting portions 11A and 11B formed integrally with the jacket tube 11. The first screw shaft 26 is drivingly rotated by the first motor 29 provided to the shaft supporting portion 11B. Moreover, the first nut member 32 is screwed (screw-connected) on the first screw shaft 26, and this first nut member 32 is movable along the first screw shaft 26 (in the axial direction of screw shaft 26).

Moreover, the first vertex portion 19a which is the base end portion of substantially-triangle-shaped swinging arm 19 is connected swingablly with the jacket tube 11 through the bolt 20. The second vertex portion 19b which is one tip portion of swinging arm 19 is connected with the extension tube 102 through the bolt 25 and the eccentric bush 24 provided as means for absorbing the center-distance variation. The third vertex portion 19c which is another tip portion of swinging arm 19 is connected with the first nut member 32 through the bolt 35, the link 33 provided as means for absorbing the center-distance variation, and the bolt 34.

The reason for using the eccentric bush 24 is as follows. Namely, an eccentric bush 24's portion on the swinging arm 19 moves along an arc defining the bolt 20 as a center of arc, and an eccentric bush 24's portion on the extension tube 102 moves along an arc defining the universal joint 103 (tilt-hinge) as a center of arc. Thereby, a path distance (center-distance) between the above two arc motions comes to vary. On the other hand, the reason for using the link 33 is similar as the first embodiment, and hence will be omitted from the following explanation. Additionally in the case where the bolt 20 connecting the first vertex portion 19a of swinging arm 19 is arranged coaxially with (a swinging center axis of) the universal joint 103 functioning as a tilt-hinge; the eccentric bush 24 is not necessary, namely the second vertex portion 19b of swinging arm 19 can be simply connected directly with the extension tube 102 only through the bolt 25.

The second screw shaft 36 is provided or included in the housing 5. Namely, the second motor 45 is provided to a shaft supporting portion 5a formed integrally with the housing 5, and one end of second screw shaft 36 is drivingly rotated by the second motor 45. On the other hand, the second nut member 42 is fixed on the shaft supporting portion 11A which is one of the pair of shaft supporting portions 11A and 11B of jacket tube 11, to be coaxial with the first screw shaft 26. Another end of second screw shaft 36 is screwed into this second nut member 42, and then is received or inserted inside the hollow hole 26b of first screw shaft 26.

In order to tilt the steering wheel, the first screw shaft 26 is made to rotate by the first motor 29. Thereby, the first nut member 32 is made to move with respect to jacket tube 11, and then the swinging arm 19 is swung around the bolt 20. Thereby, the extension tube 102 swings (is tilted) in the up-down direction with respect to the jacket tube 11, and also the extension shaft 101 swings in the up-down direction. Accordingly, the steering wheel connected with an end portion of extension shaft 101 is tilted.

Next in order to telescope the steering wheel, the second screw shaft 36 is made to rotate drivingly by the second motor 45 (i.e., is driven by the second motor 45). Thereby, the second screw shaft 36 moves while being screwed inwardly or outwardly through the second nut member 42, namely the housing 5 moves in the axial direction from the jacket tube 11. In other words, the jacket tube 11 moves or telescopes in the axial direction, with respect to the housing 5. Thereby, the upper shaft 2 moves together with the jacket tube 11 and the extension shaft 101 in the axial direction, with reference to the vehicle body. Accordingly, the steering wheel is telescoped in the front and rear direction.

Although the invention has been described above with reference to certain embodiments of the invention, the invention is not limited to the embodiments described above. Modifications and variations of the embodiments described above will occur to those skilled in the art in light of the above teachings. For example, in both of the first and second embodiments; the motor for performing the tilt mechanism has been disposed to the left side of vehicle body (i.e., at the left side of steering column, jacket tube or housing relative to the vehicle body), and the motor for performing the telescopic mechanism has been disposed to the right side of vehicle body (i.e., at the right side of steering column, jacket tube or housing relative to the vehicle body). However, these two motors may be disposed so as to reverse these right and left positions of two motors, in accordance with vehicle type, layout of the other components, or the like. Moreover, both of these two motors may be disposed only to the right side, or may be disposed only to the left side. Furthermore, these two motors may be disposed to project in the upper direction from the right and left portions of steering column (i.e., from the right and left portions of jacket tube and housing), without projecting the two motors to the right and left directions of steering shaft as shown in FIG. 4. In such a case, the projection degree (length) of each of two motors toward the right and left directions can be reduced.

In both of the first and second embodiments; both of the eccentric bush and the link are used as means for absorbing the center-distance variation. However, either of these eccentric bush and link may be used in the tilt-telescopic steering column apparatus according to the present invention. In general, the eccentric bush is preferably used in the case where the distance between two connecting portions is relatively short, and the link is preferably used in the case where the distance between two connecting portions is relatively long.

The scope of the invention is defined with reference to the following claims.

## Claims

1. A tilt-telescopic steering column apparatus comprising:
a steering shaft (15) including
a lower shaft (1) connected with a steering gear unit, and
an upper shaft (2) connected with a steering wheel, and connected with the lower shaft (1) to be telescopically movable in its axial direction with respect to the lower shaft (1);
a first supporting member (5) rotatably supporting the lower shaft (1);
a second supporting member (11) rotatably supporting the upper shaft (2) and adapted to be moved in the axial direction of steering shaft (15) with respect to the first supporting member (5);
a first screw shaft (26) disposed in substantially parallel with an axis of the steering shaft (15), and supported by one of the first supporting member (5) and the second supporting member (11) to be capable of being drivingly rotated, the first screw shaft (26) being formed with a hollow hole (26b);
a first nut member (32) screwed on the first screw shaft (26), the steering wheel being adapted to be tilted by moving the first nut member (32) in the axial direction;
a second screw shaft (36) disposed in substantially parallel with the axis of the steering shaft (15) and disposed to be coaxial with the first screw shaft (26), one end portion of the second screw shaft (36) being supported by another of the first supporting member (5) and the second supporting member (11) to be capable of being drivingly rotated, another end portion of the second screw shaft (36) being inserted into the hollow hole (26b) of first screw shaft (26) to be movable in the axial direction with respect to the first screw shaft (26); and
a second nut member (42) screwed on the second screw shaft (36), and fixed on the one of the first supporting member (5) and the second supporting member (11), the steering wheel being adapted to be telescoped by rotating the second screw shaft (36).

2. The tilt-telescopic steering column apparatus as claimed in Claim 1, wherein
the one of the first supporting member (5) and the second supporting member (11) includes a pair of shaft supporting portions (6c, 6d, 11A, 11B) rotatably supporting the first screw shaft (26) at both end portions of first screw shaft (26); and
the second nut member (42) is fixed on one of the pair of shaft supporting portions (6c, 6d, 11A, 11B) to be coaxial with the first screw shaft (26).

3. The tilt-telescopic steering column apparatus as claimed in one of Claims 1 and 2, wherein the second screw shaft (36) is adapted to be screwed back or forth in the second nut member (42) when the second screw shaft (36) is drivingly rotated.

4. The tilt-telescopic steering column apparatus as claimed in one of Claims 1-3, wherein
the first screw shaft (26) is disposed in the first supporting member (5);
the tilt-telescopic steering column apparatus further comprises a swinging arm (19) including
a first connecting portion (19a) swingablly supported by the first supporting member (5),
a second connecting portion (19b) swingablly supported through a first center-distance-variation absorbing member (24) by a vehicle body, and
a third connecting portion (19c) swingablly supported through a second center-distance-variation absorbing member (33) by the first nut member (32); and
the swinging arm (19) is arranged to allow the first supporting member (5) to be tilted with respect to the vehicle body, by rotating the first screw shaft (26), thereby moving the first nut member (32) in the axial direction with respect to the first screw shaft (26), and thereby swinging the swinging arm (19).

5. The tilt-telescopic steering column apparatus as claimed in one of Claims 1-4, wherein the steering wheel is adapted to be tilted around a hinge (7a) connecting the first supporting member (5) swingablly to the vehicle body, when the first screw shaft (26) is drivingly rotated.

6. The tilt-telescopic steering column apparatus as claimed in one of Claims 1-3, wherein
the first screw shaft (26) is disposed in the first supporting member (5);
the tilt-telescopic steering column apparatus further comprises a swinging arm (19) formed substantially in the shape of triangle, the swinging arm (19) including
a first vertex portion (19a) swingablly supported by the first supporting member (5),
a second vertex portion (19b) swingablly supported through a first center-distance-variation absorbing member (24) by a vehicle body, and
a third vertex portion (19c) swingablly supported through a second center-distance-variation absorbing member (33) by the first nut member (32); and
the swinging arm (19) is arranged to allow the first supporting member (5) to be tilted with respect to the vehicle body, by rotating the first screw shaft (26), thereby moving the first nut member (32) in the axial direction with respect to the first screw shaft (26), and thereby swinging the swinging arm (19).

7. The tilt-telescopic steering column apparatus as claimed in one of Claims 1-6, wherein
the second supporting member (11) is arranged to allow the steering wheel to be telescoped with respect to a vehicle body, by rotating the second screw shaft (36), thereby moving the second screw shaft (36) with respect to the second nut member (42) in the axial direction, and thereby telescopically moving the second supporting member (11) with respect to the first supporting member (5).

8. The tilt-telescopic steering column apparatus as claimed in one of Claims 1-3, wherein
the tilt-telescopic steering column apparatus further comprises
an extension shaft (101) interposed between the upper shaft (2) and the steering wheel, and connected swingablly with an end of the upper shaft (2) through a universal joint (103), and
a third supporting member (1-02) connected swingablly with the second supporting member (11) to be capable of swinging substantially in its up and down direction around a center of the swing of the extension shaft (101), the third supporting member (102) rotatably supporting the extension shaft (101);
the first screw shaft (26) is disposed in the second supporting member (11), and the third supporting member (102) is adapted to be tilted with respect to the second supporting member (11) by moving the first nut member (32) in the axial direction; and
the second screw shaft (36) is disposed in the first supporting member (5), and the first supporting member (5) is adapted to be telescoped with respect to the second supporting member (11) by rotating the second screw shaft (36).

## Patentansprüche

1. Neigbare Teleskop-Lenksäulenvorrichtung, die umfasst:
eine Lenkwelle (15), die enthält:
eine untere Welle (1), die mit einer Lenkgetriebeeinheit verbunden ist, und
eine obere Welle (2), die mit einem Lenkrad verbunden ist und mit der unteren Welle (1) so verbunden ist, dass sie in ihrer axialen Richtung in Bezug auf die untere Welle (1) teleskopartig bewegt werden kann;
ein erstes Trageelement (5), das die untere Welle (1) drehbar trägt;
ein zweites Trageelement (11), das die obere Welle (2) drehbar trägt und so eingerichtet ist, dass es in der axialen Richtung der Lenkwelle (15) in Bezug auf das erste Trageelement (5) bewegt wird;
eine erste Schraubenwelle (26), die im Wesentlichen parallel zu einer Achse der Lenkwelle (15) angeordnet ist und von dem ersten Trageelement (5) oder dem zweiten Trageelement (11) so getragen wird, dass sie antreibend gedreht werden kann, wobei die erste Schraubenwelle (26) mit einem hohlen Loch (26b) versehen ist;
ein erstes Mutternelement (32), das auf die erste Schraubenwelle (26) aufgeschraubt ist, wobei das Lenkrad so eingerichtet ist, dass es geneigt wird, indem das erste Mutternelement (32) in der axialen Richtung bewegt wird;
eine zweite Schraubenwelle (36), die im Wesentlichen parallel zu der Achse der Lenkwelle (15) angeordnet ist und so angeordnet ist, dass sie koaxial zu der ersten Schraubenwelle (26) ist, wobei ein Endabschnitt der zweiten Schraubenwelle (36) von dem anderen von dem ersten Trageelement (5) und dem zweiten Trageelement (11) so getragen wird, dass sie antreibend gedreht werden kann, und ein anderer Endabschnitt der zweiten Schraubenwelle (36) so in das hohle Loch (26b) der ersten Schraubenwelle (26) eingeführt ist, dass sie in der axialen Richtung in Bezug auf die erste Schraubenwelle (26) bewegt werden kann; und
ein zweites Muttemelement (42), das auf die zweite Schraubenwelle (36) aufgeschraubt und an dem ersten Trageelement (5) oder dem zweiten Trageelement (11) befestigt ist, wobei das Lenkrad so eingerichtet ist, dass es durch Drehen der zweiten Schraubenwelle (36) teleskopartig bewegt wird.

2. Neigbare Teleskop-Lenksäulenvorrichtung nach Anspruch 1, wobei
das erste Trageelement (5) oder das zweite Trageelement (11) ein Paar Wellen-Trageabschnitte (6c, 6d, 11 A, 11 B) enthält, die die erste Schraubenwelle (26) an beiden Endabschnitten der ersten Schraubenwelle (26) drehbar tragen; und
das zweite Mutternelement (42) an einem des Paars von Wellen-Trageabschnitten (6c, 6d, 11 A, 11B) so befestigt ist, dass es koaxial zu der ersten Schraubenwelle (26) ist.

3. Neigbare Teleskop-Lenksäulenvorrichtung nach einem der Ansprüche 1 und 2, wobei die zweite Schraubenwelle (36) so eingerichtet ist, dass sie in dem zweiten Muttemelement (42) hin- und hergeschraubt wird, wenn die zweite Schraubenwelle (36) antreibend gedreht wird.

4. Neigbare Teteskop-Lenksautenvorrichtung nach einem der Ansprüche 1-3, wobei
die erste Schraubenwelle in dem ersten Trageelement (5) angeordnet ist;
die neigbare Teleskop-Lenksäulenvorrichtung des Weiteren einen Schwenkarm (19) umfasst, der enthält:
einen ersten Verbindungsabschnitt (19a), der von dem ersten Trageelement (5) schwenkbar getragen wird,
einen zweiten Verbindungsabschnitt (19b), der über ein erstes Element (24) zum Absorbieren von Mittenabstandsänderung durch eine Fahrzeugkarosserie schwenkbar getragen wird, und
einen dritten Verbindungsabschnitt (19c), der über ein zweites Element (33) zum Absorbieren von Mittenabstandsänderung durch das erste Muttemelement (32) schwenkbar getragen wird: und
wobei der Schwenkarm (19) so angeordnet ist, dass das erste Trageelement (5) in Bezug auf die Fahrzeugkarosserie geneigt werden kann, indem die erste Schraubenwelle (26) gedreht wird, um so das erste Mutternelement (32) in der axialen Richtung in Bezug auf die erste Schraubenwelle (26) zu bewegen und so den Schwenkarm (19) zu schwenken.

5. Neigbare Teleskop-Lenksäulenvorrichtung nach einem der Ansprüche 1-4, wobei das Lenkrad so eingerichtet ist, dass es um ein Scharnier (7a) herum geneigt wird, das das erste Trageelement (5) schwenkbar mit der Fahrzeugkarosserie verbindet, wenn die erste Schraubenwelle (26) antreibend gedreht wird.

6. Neigbare Teleskop-Lenksäulenvorrichtung nach einem der Ansprüche 1-3, wobei
die erste Schraubenwelle (26) in dem ersten Trageelement (5) angeordnet ist;
die neigbare Teleskop-Lenksäulenvorrichtung des Weiteren einen Schwenkarm (19) umfasst, der im Wesentlichen in Form eines Dreiecks ausgebildet ist, wobei der Schwenkarm (19) enthält:
einen ersten Scheitelabschnitt (19a), der von dem ersten Trageelement (5) schwenkbar getragen wird,
einen zweiten Scheitelabschnitt (19b), der über ein erstes Element (24) zum Absorbieren von Mittenabstandsänderung durch eine Fahrzeugkarosserie schwenkbar getragen wird, und
einen dritten Scheitelabschnitt (19c), der über ein zweites Element (33) zum Absorbieren von Mittenabstandsänderung durch das erste Mutternelement (32) schwenkbar getragen wird; und
wobei der Schwenkarm (19) so angeordnet ist, dass das erste Trageelement (5) in Bezug auf die Fahrzeugkarosserie geneigt werden kann, indem die erste Schraubenwelle (26) gedreht wird, um so das erste Muttemelement (32) in der axialen Richtung in Bezug auf die erste Schraubenwelle (26) zu bewegen und so den Schwenkarm zu schwenken.

7. Neigbare Teleskop-Lenksäulenvorrichtung nach einem der Ansprüche 1-6, wobei
das zweite Trageelement (11) so angeordnet ist, dass das Lenkrad in Bezug auf eine Fahrzeugkarosserie teleskopartig bewegt werden kann, indem die zweite Schraubenwelle (36) gedreht wird und so die zweite Schraubenwelle (36) in Bezug auf das zweite Muttemelement (42) in der axialen Richtung bewegt wird und so das zweite Trageelement (11) in Bezug auf das erste Trageelement (5) teleskopartig bewegt wird.

8. Neigbare Teleskop-Lenksäulenvorrichtung nach einem der Ansprüche 1-3, wobei
die neigbare Teleskop-Lenksäulenvorrichtung des Weiteren umfasst:
eine Verlängerungswelle (101), die zwischen der oberen Welle (2) und dem Lenkrad angeordnet ist und über ein Universalgelenk (103) schwenkbar mit einem Ende der oberen Welle (2) verbunden ist, und
ein drittes Trageelement (102), das mit dem zweiten Trageelement (11) schwenkbar so verbunden ist, dass es im Wesentlichen in seiner Oben-und-Unten-Richtung um einen Schwenkmittelpunkt der Verlängerungswelle (101) herum geschwenkt werden kann, wobei das dritte Trageelement (102) die Verlängerungswelle (101) drehbar trägt;
die erste Schraubenwelle (26) in dem zweiten Trageelement (11) angeordnet ist und das dritte Trageelement (102) so eingerichtet ist, dass es in Bezug auf das zweite Trageelement (11) geneigt wird, indem das erste Mutternelement (32) in der axialen Richtung bewegt wird; und
die zweite Schraubenwelle (36) in dem ersten Trageelement (5) angeordnet ist und das erste Trageelement (5) so eingerichtet ist, dass es in Bezug auf das zweite Trageelement (11) teleskopartig bewegt wird, indem die zweite Schraubenwelle (36) gedreht wird.

## Revendications

1. Appareil de colonne de direction inclinable et télescopique comprenant:
un arbre de direction (15) incluant
un arbre inférieur (1) relié à une unité de mécanisme de direction, et
un arbre supérieur (2) relié à un volant de direction et relié à l'arbre inférieur (1) pour être déplaçable télescopiquement dans sa direction axiale par rapport à l'arbre inférieur (1);
un premier élément de support (5) supportant en rotation l'arbre inférieur (1);
un deuxième élément de support (11) supportant en rotation l'arbre supérieur (2) et apte à être déplacé dans la direction axiale de l'arbre de direction (15) par rapport au premier élément de support (5);
un premier arbre fileté (26) disposé sensiblement parallèlement avec un axe de l'arbre de direction (15), et supporté par l'un du premier élément de support (5) et du deuxième élément de support (11) pour pouvoir être en rotation de façon menante, le premier arbre fileté (26) présentant un trou creux (26b);
un premier élément d'écrou (32) vissé sur le premier arbre fileté (26), le volant de direction étant apte à être basculé en déplaçant le premier élément d'écrou (32) dans la direction axiale;
un deuxième arbre fileté (36) disposé sensiblement parallèlement à l'axe de l'arbre de direction (15) et disposé de façon à ce qu'il soit coaxial avec le premier arbre fileté (26), une portion d'extrémité du deuxième arbre fileté (36) étant supportée par un autre parmi le premier élément de support (5) et le deuxième élément de support (11) pour pouvoir être entraîné en rotation de façon menante, une autre portion d'extrémité du deuxième arbre fileté (36) étant insérée dans le trou creux (26b) du premier arbre fileté (26) pour être déplaçable dans la direction axiale par rapport au premier arbre fileté (26); et
un deuxième élément d'écrou (42) vissé sur le deuxième arbre fileté (36) et fixé sur l'un parmi le premier élément de support (5) et le deuxième élément de support (11), le volant de direction étant apte à être télescopé en faisant tourner le deuxième arbre fileté (36).

2. Appareil de colonne de direction inclinable et télescopique selon la revendication 1, où
l'un parmi le premier élément de support (5) et le deuxième élément de support (11) comporte une paire de portions de support d'arbre (6c, 6d, 11A, 11B) supportant en rotation le premier arbre fileté (26) aux deux portions d'extrémité du premier arbre fileté (26); et
le deuxième élément d'écrou (42) est fixé sur l'une de la paire de portions de support d'arbre (6c, 6d, 11A, 11B) pour être coaxial avec le premier arbre fileté (26).

3. Appareil de colonne de direction inclinable et télescopique selon l'une des revendications 1 et 2, où le deuxième arbre fileté (36) est apte à être vissé en arrière ou en avant dans le deuxième élément d'écrou (42) lorsque le deuxième arbre fileté (36) est entraîné en rotation de façon menante.

4. Appareil de colonne de direction inclinable et télescopique selon l'une des revendications 1 à 3, où
le premier arbre fileté (26) est disposé dans le premier élément de support (5);
l'appareil de colonne de direction inclinable et télescopique comprend en outre un bras pivotant (19) incluant
une première portion de connexion (19a) supportée d'une manière oscillante par le premier élément de support (5),
une deuxième portion de connexion (19b) supportée d'une manière oscillante par un premier élément d'absorption de variation centre-distance (24) par une caisse de véhicule et
une troisième portion de connexion (19c) supportée d'une manière pivotante par un deuxième élément d'absorption de variation centre-distance (33) par le premier élément d'écrou (32); et
le bras pivotant (19) est agencé pour permettre le basculement du premier élément de support (5) par rapport à la caisse de véhicule, en faisant tourner le premier arbre fileté (26), en déplaçant ainsi le premier élément d'écrou (32) dans la direction axiale par rapport au premier arbre fileté (26) et en faisant pivoter ainsi le bras de pivotement (19).

5. Appareil de colonne de direction inclinable et télescopique selon l'une des revendications 1 à 4, où le volant de direction est apte à être basculé autour d'une charnière (7a) reliant le premier élément de support (5) d'une manière pivotante à la caisse de véhicule lorsque le premier arbre fileté (26) est entraîné en rotation de façon menante.

6. Appareil de colonne de direction inclinable et télescopique selon l'une des revendications 1 à 3, où
le premier arbre fileté (26) est disposé dans le premier élément de support (5);
l'appareil de colonne de direction inclinable et télescopique comprend en outre un bras de pivotement (19) réalisé sensiblement sous la forme d'un triangle, le bras de pivotement (19) incluant
une première portion de sommet (19a) supportée d'une manière pivotante par le premier élément de support (5),
une deuxième portion de sommet (19b) supportée d'une manière pivotante par un premier élément d'absorption de variation centre-distance (24) par une caisse de véhicule, et
une troisième portion de sommet (19c) supportée d'une manière pivotante par un deuxième élément d'absorption de variation centre-distance (33) par le premier élément d'écrou (32); et
le bras pivotant (19) est agencé pour permettre le basculement du premier élément de support (5) par rapport à la caisse de véhicule, en faisant tourner le premier arbre fileté (26), en déplaçant ainsi le premier élément d'écrou (32) dans la direction axiale par rapport au premier arbre fileté (26) et en faisant pivoter ainsi le bras de pivotement (19).

7. Appareil de colonne de direction inclinable et télescopique selon l'une des revendications 1 à 6, où
le deuxième élément de support (11) est agencé pour permettre le télescopage du volant de direction par rapport à une caisse de véhicule, en faisant tourner le deuxième arbre fileté (36), en déplaçant ainsi le deuxième arbre fileté (36) par rapport au deuxième élément d'écrou (42) dans la direction axiale, et en déplaçant ainsi télescopiquement le deuxième élément de support (11) par rapport au premier élément de support (5).

8. Appareil de colonne de direction inclinable et télescopique selon l'une des revendications 1 à 3, où
l'appareil de colonne de direction inclinable et télescopique comprend en outre
un arbre d'extension (101) interposé entre l'arbre supérieur (2) et le volant de direction et relié d'une manière pivotante à une extrémité de l'arbre supérieur (2) par un joint universel (103), et
un troisième élément de support (102) relié d'une manière pivotante au deuxième élément de support (11) pour pouvoir pivoter sensiblement dans sa direction ascendante et descendante autour du centre de pivotement de l'arbre d'extension (101), le troisième élément de support (102) supportant en rotation l'arbre d'extension (101);
le premier arbre fileté (26) est disposé dans le deuxième élément de support (11), et le troisième élément de support (102) est apte à être basculé par rapport au deuxième élément de support (11) en déplaçant le premier élément d'écrou (32) dans la direction axiale; et
le deuxième arbre fileté (36) est disposé dans le premier élément de support (5), et le premier élément de support (5) est apte à être télescopé par rapport au deuxième élément de support (11) en faisant tourner le deuxième arbre fileté (36).
